# FASCICULE DE BREVET EUROPEEN

(11) **EP 1 032 490 B1**
(45) Date de publication et mention de la délivrance du brevet: **24.03.2004**
(21) Numéro de dépôt: 98955689.9
(22) Date de dépôt: 18.11.1998
(51) Int. Cl.: B27K 3/34, B27K 3/15

(54) **PROCEDE DE TRAITEMENT THERMO-MECANIQUE DU BOIS NATUREL, DETERIORE OU GORGE D'EAU ET PRODUIT OBTENUS PAR LEDIT PROCEDE**
VERFAHREN ZUR THERMOMECHANISCHEN BEHANDLUNG VON BESCHÄDIGTEM ODER MIT WASSER GETRÄNTKEM NATURHOLZ UND DADURCH ERHALTENE PRODUKTE
METHOD FOR THERMO-MECHANICAL TREATMENT OF DAMAGED OR WATERLOGGED NATURAL TIMBER AND PRODUCTS OBTAINED BY SAID PROCESS

(30) Priorité: 19.11.1997 FR 9714513
(43) Date de publication de la demande: 06.09.2000
(73) Titulaire: Université de la Rochelle, 17042 La Rochelle Cedex 1 (FR); Contento Trade S.r.l., 33030 Campoformido (IT)
(72) Inventeur: ALLAF, Karim, F-17000 La Rochelle (FR); CIOFFI, Flavio, I-33030 Campoformido (IT); REZZOUG, Sid, Ahmed, LMTAI, F-17042 La Rochelle Cedex 01 (FR); CONTENTO, Maria-Pia, I-33030 Campoformido (IT); LOUKA, Nicolas, LMTAI, F-17042 La Rochelle Cedex 01 (FR); SANYA, Emile, LMTAI, F-17042 La Rochelle cedex 01 (FR)
(74) Mandataire: Breese, Pierre
(86) Numéro de dépôt international: PCT/FR1998/002463
(87) Numéro de publication internationale: WO 1999/025527

(56) Documents cités:
- US-A- 1 877 855
- US-A- 4 546 133
- DATABASE WPI Section Ch, Week 9301 Derwent Publications Ltd., London, GB; Class A32, AN 93-004589 XP002072703 & JP 04 332602 A (MORI M)
- DATABASE WPI Section Ch, Week 8925 Derwent Publications Ltd., London, GB; Class A97, AN 89-183261 XP002072704 & JP 01 122401 A (DAINIPPON MOKUZAI B)

## Description

La présente invention concerne un procédé de traitement du bois naturel, archéologique, détérioré ou gorgé d'eau en vue d'améliorer la qualité du produit séché, favoriser sa conservation et aboutir à sa restauration éventuelle et des produits composites à base de bois amidonnés traités suivant ledit procédé.

On connaît dans l'état de l'art de la technique, des procédés de séchage classique du bois naturel brut, des procédés de lyophilisation, d'immersion dans un bain de résine liquide et de traitement mettant en oeuvre des rayonnements gamma appliqués au bois détérioré, archéologique ou gorgé d'eau. Ces opérations, mises en oeuvre séparément (séchage classique différemment appliqué au bois naturel) ou couplées (traitement PEG suivi de lyophilisation et de traitement gamma appliqué au bois archéologique) impliquent un temps de traitement assez important menant à un produit de qualité relativement médiocre. En outre, dans le cas de bois gorgé d'eau, archéologique ou submergé, les procédés utilisés impliquent des technologies particulièrement chères et aboutissent à un produit difficilement comparable au produit d'origine et à son aspect naturel ; la restauration est généralement impossible et seule une certaine préservation est réalisée.

La présente invention vise à remédier à ces inconvénients en proposant un procédé de traitement capable d'assurer la restauration, la conservation et la préservation du bois, tout en lui confiant une apparence et un aspect extérieur comparables aux produits naturels et une qualité mécanique améliorée.

La présente invention consiste à faire appliquer au bois naturel brut, bois détérioré archéologique et/ou gorgé d'eau, un traitement faisant principalement appel à au moins une étape d'amidonnage et à une étape de traitement thermique visant principalement la gélatinisation de la majeure partie de l'amidon inséré dans le volume du produit.

L'étape d'amidonnage peut être réalisée en plongeant la pièce de bois dans une solution de 5 à 70 % d'amidon dans de l'eau. La concentration en poudre d'amidon dépend du type de produit à traiter et d'amidon à utiliser. La durée de cette étape d'amidonnage dépend de l'épaisseur des échantillons, de la nature du bois et de son état ; il est supérieur à 1 heure pour du bois de 2 mm d'épaisseur.

Selon une variante, en vue d'améliorer la pénétration de l'amidon au sein de la structure du bois, une poudre d'amidon bien adaptée est utilisée avec éventuellement un couplage à des agitations mécaniques ou ultra-soniques.

Selon une variante, en vue d'améliorer la pénétration de l'amidon au sein de la structure du bois, il est possible de faire appel à des méthodes basées sur l'application du vide et/ou de haute pression. Ces méthodes sont normalement utilisées pour permettre une meilleure pénétration de preservateurs (comme la créosote) dans la structure du bois. Les principaux procédés sont de type traitement à " cellule pleine " "*full-cell*" et à cellule vide "*empty-cell*".

Selon une variante, en vue d'améliorer la pénétration de l'amidon au sein de la structure du bois, il est possible d'utiliser des additifs capables d'augmenter la solubilité de l'amidon dans l'eau tels que le persulfate d'ammonium

Selon une variante, en vue d'améliorer l'imprégnation et par la suite la gélatinisation et réduire la rétrogradation de l'amidon au sein de la structure du bois, il est possible d'utiliser une solution de sucre spécifique couplé ou non à de l'amidon plus particulièrement dans le cas du bois archéologique ; des réactions enzymatiques adéquates pourront ainsi intervenir.

Le procédé selon l'invention comporte, après l'étape d'amidonnage, une étape de traitement thermique réalisée sous pression de vapeur humide, en vue de gélatiniser l'amidon. Selon une variante préférée, l'étape de traitement thermique du procédé selon l'invention est réalisée sous une pression de vapeur humide supérieure à 2 bar, pendant une durée supérieure à 30 minutes. La gélatinisation aura pour principale fonction d'améliorer les caractéristiques et la qualité du bois.

Avantageusement le processus de traitement thermique de gélatinisation peut être couplé à une diminution rapide de pression en vue de freiner les phénomènes de rétrogradation thermique de l'amidon durant le séchage. Ces phénomènes peuvent encore être réduits par l'utilisation d'un taux élevé d'amylopectine ou d'additifs spécifiques (alcools gras oxydés par d'oxydes d'éthylène).

Selon une variante, le procédé comporte une étape de préparation initiale de la pièce par nettoyage à l'eau distillée ou désionisée.

Avantageusement, le procédé comporte en outre une ou plusieurs étapes de déshydratation partielle ou complète, par convection, sous film ou par détentes successives DDS.

Avantageusement, l'étape de préparation initiale du produit consiste en son nettoyage à l'eau distillée, désionisée etc., en vue d'éliminer divers composés inadéquats avec l'amidonnage et le traitement thermique. Une étape de déshydratation spécifique partielle, par convection, sous film ou par détentes successives peut intervenir à divers moments du traitement (avant l'amidonnage, avant le traitement thermique ou en tant qu'étape finale de l'opération).

Selon une variante du procédé, l'étape de préparation du produit peut, dans le cas de produits détériorés, archéologiques, gorgés d'eau, ..., être couplée à un traitement de blanchiment et/ou de restauration chimique ou, avantageusement, par traitement enzymatique et/ou micro-biologique adéquats, suivi ou non par un séchage partiel, un amidonnage ou un traitement thermique. Les traitements enzymatique et micro-biologique visent le blanchiment éventuel du produit à traiter et la génération de cellulose par réactions de micro-organismes adéquats.

Selon une variante du procédé, il est possible de procéder à l'ajout d'un additif à effet biocide de longue durée sur la solution d'amidon avant l'étape d'imprégnation tel l'acide borique.

L'étape d'amidonnage peut être réalisée par simple immersion du bois dans de l'eau ayant une certaine concentration de poudre d'amidon à des taux variables suivant le type du produit à traiter. La variété d'amidon, sa température de gélatinisation et sa nature (cathionique, faiblement cathionique, ionique, etc.), les caractéristiques de poudre, la concentration de l'eau en amidon, la pression sous laquelle est réalisée l'opération et la durée dépendent étroitement des dimensions des échantillons, de la nature du bois et surtout de sa structure.

Une variante de l'opération consiste à choisir un autre liquide porteur des granules d'amidon et leur permettant de pénétrer plus facilement les interstices du bois sans gonflement. L'élimination de ce liquide et la réhumidification interviendront par la suite avant l'étape du traitement thermique.

L'étape de traitement thermique nécessite une température et une durée assurant la gélatinisation de l'amidon à tous les niveaux du produit sans détérioration du bois. Le niveau de température, la durée de cette étape et la teneur initiale en humidité dépendront des dimensions des échantillons, de la qualité du produit, de sa nature et son degré de détérioration éventuelle.

Une installation pour la réalisation d'une ou plusieurs étapes du traitement complet comportera une enceinte destinée à recevoir les produits à traiter, l'eau chargée d'amidon, les moyens de mise sous pression et de chauffage sous des températures inférieures à celles permettant la gélatinisation de l'amidon.

Cette même enceinte, ou éventuellement une autre, est destinée à la réalisation de la préparation initiale du produit. Il y sera réalisé les opérations de lavage, rinçage et, éventuellement, du traitement enzymatique et/ou par micro-organismes.

Cette même enceinte, ou éventuellement une autre, est destinée à la réalisation du traitement thermique. Elle peut ainsi recevoir de la vapeur d'eau sous pression dont l'avantage par comparaison avec d'autres sources de chaleur est sa capacité de préserver la qualité du bois et d'assurer la meilleure homogénéisation de la température dans le volume du bois à traiter. La température à l'intérieur du bois doit atteindre un niveau permettant la fusion et la gélatinisation de tout l'amidon présent.

Cette même enceinte, ou une autre, pourra également être utilisée pour la réalisation de la déshydratation par convection, par détentes successives, sous vide ou sous film.

L'invention sera mieux comprise à la lecture de la description de deux exemples de traitement opérés le premier sur des morceaux de bois gorgé d'eau de petite taille (3 cm x 2 cm x 15 cm) récupérés sur des épaves de bateaux dans la mer, et le deuxième sur du bois naturel.

Les échantillons du bois gorgé d'eau sont d'abord rincés à l'eau distillée durant plusieurs jours, nettoyés puis partiellement déshydratés sous film. Ces échantillons n'ont pas été traités par blanchiment enzymatique, ni par restauration en cellulose générée par micro-organismes en raison de leur bonne qualité relative.

Les échantillons sont par la suite immergés dans une solution d'eau amidonnée à un taux de 300 g d'amidon par litre d'eau. Une faible agitation mécanique permanente a permis d'assurer l'homogénéité de l'amidon dans l'eau. Suite à une durée de sept jours, les échantillons retirés de l'eau amidonnée, subissent une déshydratation partielle jusqu'à un taux d'eau voisin de 30 % du produit total. Un traitement thermique est alors réalisé sous une pression de 3,5 bar de vapeur humide durant 3 heures. A la suite de cette opération, un passage très lent vers le vide permet de refroidir les échantillons, et d'en réduire le taux d'eau.

Une étape de séchage très doux est alors réalisée (sous film) et le produit récupéré est de très bonne qualité visuelle et mécanique.

Le deuxième exemple concerne un échantillon de bois naturel de 3 mm d'épaisseur.

Les échantillons de bois vert (40 mm x 40 mm x 3 mm), sont déshydratés jusqu'à une humidité moyenne de 12 % . Ces échantillons n'ont pas été traités par blanchiment enzymatique.

Les échantillons sont par la suite immergés dans une solution d'eau amidonnée à un taux de 300 g d'amidon par litre d'eau. Une faible agitation mécanique a permis d'assurer l'homogénéité de l'amidon dans l'eau. Après sept jours, les échantillons retirés de l'eau amidonnée subissent alors une déshydratation partielle jusqu'à un taux avoisinant les 30 % du produit total. Un traitement thermique est alors réalisé sous une pression de 3-3,5 bar de vapeur humide durant 3 heures. A la suite de cette opération, un passage très lent vers le vide permet de refroidir les échantillons, et d'en réduire le taux d'eau.

Les échantillons ainsi préparés peuvent subir les traitements classiques. L'action thermique assure la destruction des micro-organismes initialement présents ou additionnés ainsi que celle des enzymes d'origine ou additionnées dans le volume du bois.

## Revendications

1. Procédé de traitement destiné au bois naturel brut, bois détérioré archéologique et/ou gorgé d'eau comportant une ou plusieurs étapes de séchage, notamment pour la restauration de telles pièces, **caractérisé en ce que** l'on procède à un traitement consistant en une étape d'amidonnage et une étape de traitement thermique visant principalement la gélatinisation de la majeure partie de l'amidon inséré dans le volume du produit.

2. Procédé selon la revendication 1, **caractérisé en ce que** l'étape d'amidonnage est réalisée par imprégnation en plongeant la pièce en bois dans une solution de plus de 5% d'amidon (en poids) dans de l'eau.

3. Procédé selon l'une quelconque des revendications précédentes, **caractérisé par** l'utilisation de traitement sous vide, sous pression ou sous un gradient de pression à des températures en dessous de la limite de gélatinisation de l'amidon utilisé en vue d'accélérer l'amidonnage des pièces de bois à traiter.

4. Procédé selon la revendication 1 ou 3, **caractérisé en ce que** l'étape d'amidonnage est réalisée à l'aide d'un liquide porteur n'impliquant pas le gonflement des granules d'amidon et que cette étape est suivie par l'élimination du liquide.

5. Procédé selon l'une quelconque des revendications précédentes, **caractérisé en ce que** l'étape de gélatinisation est réalisée par traitement thermique sous pression de vapeur d'eau.

6. Procédé selon l'une quelconque des revendications précédentes, **caractérisé en ce qu'**il comporte une étape de préparation initiale de nettoyage et blanchiment de la pièce en bois.

7. Procédé selon les revendications précédentes, **caractérisé en ce que** l'étape de gélatinisation est précédée d'une maîtrise de l'humidité du bois par déshydratation ou réhumidification partielles du bois.

8. Procédé selon l'une quelconque des revendications précédentes, **caractérisé en ce qu'**il comporte une ou plusieurs étapes de déshydratation partielle ou complète par convection, sous film ou par DDS.

9. Procédé selon l'une quelconque des revendications précédentes, **caractérisé par** le couplage de la déshydratation avec un traitement thermo-mécanique permettant d'éliminer tout risque de retrait de la structure et/ou de l'amidon gélatinisé, consistant par exemple à exercer une pression de 3-3,5 bar de vapeur humide durant 3 heures puis un passage très lent vers le vide permettant de refroidir les échantillons et d'en réduire le taux d'eau.

10. Procédé selon la revendication 2, **caractérisé en ce que** l'on procède à l'ajout d'un additif à effet biocide de longue durée sur la solution d'amidon.

11. Procédé selon la revendication 2 ou 10, **caractérisé en ce que** la solubilisation de l'amidon est améliorée par l'ajout d'agents solubilisants.

12. Procédé selon l'une quelconque des revendications précédentes, caractérisé en l'utilisation des agitateurs mécaniques ou ultra-soniques en vue d'accélérer l'amidonnage des pièces de bois à traiter.

13. Procédé selon l'une quelconque des revendications précédentes, **caractérisé par** l'utilisation d'un amidon de haute teneur en amylopectine supérieure à 80% ou/et par utilisation d'additifs spécifiques comme des alcools gras éthoxylés par d'oxydes d'éthylène en vue de réduire la rétrogradation de l'amidon

14. Procédé selon l'une quelconque des revendications précédentes, **caractérisé en ce que** l'on procède à une étape de traitement par réactions enzymatiques en vue du blanchiment du bois, ou microbiologiques en vue de génération de cellulose à partir d'une source biologique tel que l'amidon ou le sucre.

15. Produits composites à base de bois amidonnés traités suivant les diverses revendications précédentes.

## Claims

1. Treatment process intended for rough natural wood, deteriorated archaeological wood and / or waterlogged wood comprising one or several drying steps, particularly for restoration of such parts, **characterised in that** a treatment is carried out consisting of a starching step and a heat treatment step aimed mainly at gelatinisation of most of the starch injected into the volume of the product.

2. Process according to claim 1, **characterised in that** the starching step is done by impregnation by dipping the wood part into a solution containing more than 5% of starch (by weight) in water.

3. Process according to one of the previous claims, **characterised by** the use of a treatment under a vacuum, under pressure or a pressure gradient at temperatures below the gelatinisation point of starch used to accelerate starching of wood parts to be treated.

4. Process according to claim 1 or 3, **characterised in that** the starching step is done using a carrier liquid not involving swelling of starch grains, and **in that** this step is followed by elimination of liquid.

5. Process according to one of the previous claims, **characterised in that** the gelatinisation step is done by heat treatment under steam pressure.

6. Process according to one of the previous claims, **characterised in that** it comprises a step for initial preparation of cleaning and bleaching of the wood part.

7. Process according to the previous claims, **characterised in that** the gelatinisation step is preceded by a check of the wood moisture content by partial dehydration or rehumidification of the wood.

8. Process according to one of the previous claims, **characterised in that** it comprises one or several partial or complete dehydration steps by convection, under a film or by DDS.

9. Process according to one of the previous claims, **characterised by** combining dehydration with a thermomechanical treatment to eliminate the risk of shrinkage of the structure and / or the gelatinised starch, for example consisting of applying a pressure of 3 - 3.5 bars of wet steam for 3 hours and then very slowly creating a vacuum in order to cool the samples and reduce the water content.

10. Process according to claim 2, **characterised in that** an additive with a long-term biocide effect on the starch solution is added.

11. Process according to claim 2 or 10, **characterised in that** solubilisation of the starch is improved by adding solubilising agents.

12. Process according to one of the previous claims, **characterised in that** mechanical or ultrasonic stirrers are used to accelerate starching of wood parts to be treated.

13. Process according to one of the previous claims, **characterised by** the use of starch with a high content of amylopectine equal to more than 80%, and / or by the use of specific additives such as fatty alcohols ethoxylated by ethylene oxides in order to reduce starch retrogradation.

14. Process according to one of the previous claims, **characterised in that** a treatment step is carried out, by enzymatic reactions in order to bleach the wood, or microbiological reactions in order to generate cellulose from a biological source such as starch or sugar.

15. Composite products based on starched wood treated according to either the above claims.

## Patentansprüche

1. Verfahren zur Behandlung von Naturrohholz, beschädigtem Archäologie- und/oder wassergetränktem Holz, das eine oder mehrere Trocknungsschritte umfasst, insbesondere zur Restaurierung von solchen Teilen, **dadurch gekennzeichnet, dass** eine Behandlung durchgeführt wird, die aus einem Schritt zur Stärkung und einem Schritt zur thermischen Behandlung besteht, der im wesentlichen auf die Gelatinisierung des größten Teils der in die Produktmasse eingebrachten Stärke abzielt.

2. Verfahren nach Anspruch 1, **dadurch gekennzeichnet, dass** der Stärkungsschritt durch Imprägnieren durchgeführt wird, indem man das Holzteil in eine Lösung mit mehr als 5 % Stärke (Massenanteil) im Wasser taucht.

3. Verfahren nach einem der vorhergehenden Ansprüche, durch die Verwendung einer Behandlung unter Vakuum, unter Druck oder unter einem Druckgradienten bei Temperaturen unterhalb der Stärkungssgrenze der eingesetzten Stärke gekennzeichnet, um das Stärken der zu behandelnden Holzteile zu beschleunigen.

4. Verfahren nach Anspruch 1 oder 3, **dadurch gekennzeichnet, dass** der Stärkungsschritt mit Hilfe einer Trägerflüssigkeit durchgeführt wird, die nicht zum Aufblähen der Stärkekörner führt und dadurch, dass diesem Schritt die Absonderung der Flüssigkeit folgt.

5. Verfahren nach einem der vorhergehenden Ansprüche, **dadurch gekennzeichnet, dass** der Gelatinisierungsschritt durch thermische Behandlung unter Wasserdampfdruck durchgeführt wird.

6. Verfahren nach einem der vorhergehenden Ansprüche, **dadurch gekennzeichnet, dass** es einen Schritt der Erstvorbereitung der Reinigung und des Bleichens des Holzstücks umfasst.

7. Verfahren nach den vorhergehenden Ansprüchen, **dadurch gekennzeichnet, dass** vor dem Gelatinisierungsschritt die Feuchtigkeit des Holzes durch teilweisen Entzug oder zufuhr von Wasser gesteuert wird.

8. Verfahren nach einem der vorhergehenden Ansprüche, **dadurch gekennzeichnet, dass** dieses einen oder mehrere Schritte des teilweisen oder vollständigen Wasserentzugs durch Konvektion unter Folie oder durch DDS umfasst.

9. Verfahren nach einem der vorhergehenden Ansprüche, durch die Kopplung des Wasserentzugs mit einer mechanisch-thermischen Behandlung gekennzeichnet, wodurch jedwedes Risiko des Schrumpfens der Struktur und/oder der gelatinisierten Stärke ausgeschaltet wird, zum Beispiel darin bestehend, drei Stunden lang einen Nassdampfdruck von 3-3,5 bar auszuüben bei anschließendem sehr langsamen Übergang zu einem Vakuum zur Abkühlung der Muster und Reduzierung des Wassergehalts in diesen.

10. Verfahren nach Anspruch 2, **dadurch gekennzeichnet, dass** der Stärkelösung ein Zusatzstoff mit biozider Langzeitwirkung zugesetzt wird.

11. Verfahren nach Anspruch 2 oder 10, **dadurch gekennzeichnet, dass** die Solubisierung der Stärke durch Hinzusetzung von solubisierenden Mitteln verbessert wird.

12. Verfahren nach einem der vorhergehenden Ansprüche, durch den Einsatz von mechanischen oder Ultraschall-Rührern zur Verbesserung der Stärkung der zu behandelnden Holzstücke gekennzeichnet.

13. Verfahren nach einem der vorhergehenden Ansprüche, durch den Einsatz einer Stärke mit einem hohen Amylopektingehalt von mehr als 80 % und/oder durch den Einsatz von speziellen Zusatzstoffen wie durch Ethylenoxid ethoxylierte Fettalkohole zur Minderung der Stärkerückbildung gekennzeichnet.

14. Verfahren nach einem der vorhergehenden Ansprüche, **dadurch gekennzeichnet, dass** man einen Behandlungsschritt durch enzymatische Reaktionen zum Bleichen des Holzes oder durch mikrobiologische zur Bildung von Zellulose ausgehend von einer biologischen Quelle wie Stärke oder Zucker durchführt.

15. Kompositprodukte auf der Grundlage von gestärkten Hölzern, die nach den verschiedenen vorhergehenden Ansprüchen behandelt wurden.
